# EUROPÄISCHE PATENTSCHRIFT

(11) **EP 1 979 709 B1**
(45) Veröffentlichungstag und Bekanntmachung des Hinweises auf die Patenterteilung: **12.03.2014**
(21) Anmeldenummer: 07703888.3
(22) Anmeldetag: 16.01.2007
(51) Int. Cl.: G01C 21/16, G01C 19/56, B60T 8/1755, G01C 19/5783

(54) **INERTIALSENSORANORDNUNG**
INERTIAL SENSOR ARRANGEMENT
SYSTEME A SONDES D'INERTIE

(30) Priorität: 18.01.2006 DE 102006002350
(43) Veröffentlichungstag der Anmeldung: 15.10.2008
(73) Patentinhaber: Robert Bosch GmbH, 70442 Stuttgart (DE)
(72) Erfinder: INGRISCH, Kurt, 72762 Reutlingen (DE); ILIC, Erich, 72805 Unterhausen (DE); ABENDROTH, Manfred, 71672 Marbach (DE)
(86) Internationale Anmeldenummer: PCT/EP2007/050373
(87) Internationale Veröffentlichungsnummer: WO 2007/082875

(56) Entgegenhaltungen:
- DE-A1- 19 921 692
- US-A1- 2002 158 390
- US-A1- 2006 000 294

## Beschreibung

Die Erfindung betrifft eine Inertialsensoranordnung gemäß dem O-berbegriff des Anspruchs 1, insbesondere zur Montage in einem Kraftfahrzeug, sowie ein Steuergerät für ein System zur Regelung der Fahrdynamik eines Kraftfahrzeugs mit einer solchen Sensoranordnung.

In Kraftfahrzeugen finden aktive und passive Sicherheitssysteme eine immer breitere Verwendung, wobei Rückhaltesysteme, wie Airbags, sowie Systeme zur Regelung der Fahrdynamik, wie ESP (Elektronisches Stabilitätsprogramm), heute bereits zur Standardausrüstung gehören. Ein wesentlicher Bestandteil dieser Systeme sind Inertialsensoren, die zur Messung der Beschleunigung oder Gier- bzw. Drehrate des Fahrzeugs verwendet werden. Während die bei Rückhaltesystemen, wie Airbags, eingesetzten Inertialsensoren, wie Beschleunigungssensoren zur Messung der Aufprallbeschleunigung oder Drehratensensoren für die Roll-Over-Sensierung meist einen integralen Bestandteil eines Steuergeräts des Rückhaltesystems bilden, sind Sensoren zur Messung der fahrdynamischen Gier- bzw. Drehrate und der Querbeschleunigung von Systemen zur Regelung der Fahrdynamik, wie ESP, zumeist als Wegbausensoren realisiert und getrennt vom Steuergerät des Systems an einer geeigneten Stelle in der Fahrgastzelle untergebracht. Jedoch geht auch dort der Trend zur Integration des Inertialsensors in ein Anbausteuergerät.

Eine kostengünstige technische Lösung zur Herstellung von Drehratensensoren sind mikromechanische Techniken, bei denen ein Messelement des Sensors zum Beispiel aus einem Substrat herausgeätzt wird. Im Betrieb des Sensors wird das Messelement durch eine geeignete Anregung in eine oszillierende Bewegung versetzt, deren Frequenz zumeist im Bereich zwischen 1 und 30 kHz liegt, und die Coriolis-Beschleunigung gemessen, die bei einer Drehung des oszillierenden Messelements entsteht und ein Maß für die Drehrate ist. Eine Auswerteschaltung mit einem geeigneten Demodulator bestimmt aus der gemessenen Coriolis-Beschleunigung den Signalanteil, der zur Drehrate proportional ist, und daraus die Drehrate.

Ein großes Problem beim Einsatz derartiger Drehratensensoren in Kraftfahrzeugen sind jedoch Störbeschleunigungen, die je nach Anbaustelle der Sensoren in mehr oder weniger großem Umfang auftreten können und die, wenn sie das Messelement des Sensors erreichen, insbesondere dann einen besonders starken Einfluss auf dessen Ausgangssignal haben, wenn ihre Frequenz im Bereich der Anregungsfrequenz des Sensors liegt. Weil der Demodulator bzw. die Auswerteschaltung in diesem Fall nicht mehr zwischen Coriolis-Beschleunigung und Störbeschleunigung unterscheiden kann, wird das Ausgangssignal des Sensors stark gestört und ist somit für das System zur Fahrdynamik-Regelung nicht mehr akzeptabel, so dass es zur Systemabschaltung oder anderen Störungen kommen kann.

Um die Wirkung von Störbeschleunigungen zu minimieren, werden verschiedene Methoden angewandt, wie die Suche nach einer Anbaustelle, an der nur geringe Störbeschleunigungen auftreten, eine schwingungstechnische Entkopplung des Sensors von der Anbaustelle, oder Kombinationen davon. Während sich jedoch die Suche nach einer geeigneten Anbaustelle wegen der beengten Platzverhältnisse in modernen Personenkraftwagen und der dafür erforderlichen Fahrversuche als schwierig und aufwendig erweisen kann, ist die Verpackung bekannter mikromechanischer Messelemente von Inertialsensoren trotz vielfältiger Bauformen nicht geeignet, die Einkopplung von Störbeschleunigungen zu verhindern, weshalb gelegentlich die gesamte, den Sensor enthaltende Baugruppe, zum Beispiel das gesamte Steuergerät, über ein elastisches Koppelglied mit der Anbaustelle verbunden wird.

Aus der US 2006/0000294 A1 ist bereits eine Inertialsensoranordnung der eingangs genannten Art bekannt, bei der die Unterseite des Sensormoduls mit der Oberseite des Trägers durch das elastische Koppelelement verbunden ist, das aus einem Kleberelement mit Viscoelastizität besteht und für eine Schwingungsabsorption sorgen soll. Wenn sich der Träger und die Montageplatte infolge einer Störbeschleunigung, deren Richtung der Richtung des Vektors der Corio-lis-Beschleunigung des Drehratensensors entspricht, relativ zueinander bewegen, erfolgt diese Bewegung in einer Richtung, die zu den gegenüberliegenden Breitseitenflächen des Sensormoduls und des Trägers parallel ist, so dass das Kleberelement durch eine solche Störbeschteunigung zwischen den gegenüberliegenden Breitseitenflächen auf Scherung beansprucht wird. Eine vorbestimmte Dämpfungseigenschaft des Kleberelements mit einer vorbestimmten Dämpfungsfrequenz kann durch Veränderung der Elastizität des Klebers auf der Grundlage der Abmessungen des Sensormoduls gesteuert werden. Jedoch nimmt bei vielen Elastomermaterialien die Elastizität infolge von Temperaturschwankungen ab, was zu einer Veränderung der Dämpfungsfrequenz führt.

Weiter ist es zum Beispiel aus der DE 44 31 232 A1 bei Beschleunigungssensoren oder Drehratensensoren bereits an sich bekannt, das mikromechanisch hergestellte Messelement selbst als integriertes Feder-Masse-System mit Dämpfung auszubilden, wobei aus dem Substrat herausgearbeitete elastische Stege für die Feder- und Dämpfungswirkung zwischen dem Messelement und einem wie das Messelement vom Substrat gebildeten Sockel sorgen.

Aus der US 2002/0158390 A1 ist es bei einem kompakten Schwingungsisoliersystem mit einem zylindrischen Gehäuse und einer im Gehäuse aufgehängten, vom Gehäuse entkoppelten Inertialsensoranordnung bekannt, eine Isolatorbefestigung vorzusehen, die von einem ringförmigen Elastomer-Element gebildet wird, das zwischen einem starren ringförmigen äußeren Element und einem starren ringförmigen inneren Element angeordnet ist, so dass es bei einer Relativbewegung zwischen den beiden starren Elementen in Richtung eine Längsmittelachse des zylindrischen Gehäuses auf Scherung beansprucht wird.

Aus der DE 199 21 692 A1 ist es bei einer Anordnung zum Schutz von elektronischen Funktionseinheiten oder Funktionsgruppen bekannt, mehrere ineinander geschachtelte Gehäuse vorzusehen, die zum Beispiel durch schwingungsdämpfende Koppelelemente vibrationsdämpfend mit dem oder den jeweils benachbarten Gehäusen verbunden sind. Das innerste Gehäuse enthält einen Gierratensensor S1.

Der Erfindung liegt die Aufgabe zugrunde, eine im Vergleich zum Stand der Technik verbesserte Inertialsensoranordnung, ein verbessertes Anbausteuergerät sowie ein verbessertes Kraftfahrzeug zu schaffen.

Die erfindungsgemäße Inertialsensoranordnung mit den Merkmalen des Anspruchs 1 gestattet es, trotz einer Verwendung von handelsüblichen, aus dem Inertialsensor und einer integrierten Auswerteschaltung bestehenden Sensormodulen den Applikationsaufwand bei einem Einsatz in Kraftfahrzeugen erheblich zu reduzieren, da sowohl eine Suche nach einer geeigneten Anbaustelle als auch das Erfordernis von nachträglichen Maßnahmen zur Schwingungsentkopplung entbehrlich ist. Mit den erfindungsgemäßen Maßnahmen liefert der Sensor selbst bei einer Anbringung der Sensoranordnung in einer stark durch Störbeschleunigungen oder Störschwingungen belasteten Umgebung unter allen Umständen sichere und zuverlässige Signale.

Der Erfindung liegt der Gedanke zugrunde, das Sensormodul durch geeignete Festlegung der Masse des Feder-Masse-Systems, der Federsteifigkeit der Feder des Feder-Masse-Systems, sowie von deren Dämpfung schwingungstechnisch vom Träger zu entkoppeln, um die Beschleunigungs- oder Schwingungsempfindlichkeit des Drehratensensors in der Anordnung in den kritischen Frequenzbereichen entscheidend zu verringern.

Nach dem Coriolis-Prinzip arbeitende Drehratensensoren reagieren besonders empfindlich auf Störbeschleunigungen in der Raumrichtung, in die der Vektor der Coriolis-Beschleunigung zeigt. Aus diesem Grund ist es besonders wichtig, die Funktion der Schwingungsabkopplung oder Schwingungsentkopplung für diese Raumrichtung auszulegen.

Erfindungsgemäß wird zur schwingungstechnischen Entkopplung des Sensormoduls vom Träger ein Elastomermaterial verwendet, das sowohl für die Federung als auch für die Dämpfung der Masse des Feder-Masse-Systems in Bezug zum Träger sorgt. Damit das Elastomermaterial als Feder-/Dämpfungselement verwendet werden kann, ist die Konstruktion erfindungsgemäß so ausgelegt, dass das Elastomermaterial in der Raumrichtung, in der die Schwingungsentkopplung stattfinden soll, das heißt in der Raumrichtung, in die der Vektor der Coriolis-Beschleunigung zeigt, auf Scherung belastet wird, da nur eine Scherbelastung des Elastomermaterials eine vernünftige Auslegung einer Schwingungsabkopplung oder Schwingungsentkopplung gewährleistet. Ein Vorteil einer Verwendung des Elastomermaterials besteht darin, dass sich dessen Federsteifigkeit und damit die Resonanzfrequenz des Systems durch Veränderung der Materialeigenschaften und/oder Abmessungen relativ einfach verändern lässt.

Mit Hilfe einer vom Elastomermaterial gebildeten Feder mit Dämpfung zwischen dem Sensormodul und dem Träger kann auch die Herstellung der Sensoranordnung vereinfacht werden, indem das Sensormodul oder eine Montageplatte für das letztere zusammen mit dem Träger in ein Spritzgussformwerkzeug eingelegt und das E-lastomermaterial um das Sensormodul bzw. die Montageplatte herum in einen zwischen dem Sensormodul bzw. der Montageplatte und dem Träger vorhandenen Spalt eingespritzt wird, um beide Komponenten elastisch miteinander zu verbinden und gleichzeitig schwingungstechnisch zu entkoppeln.

Vorzugsweise wird dazu ein Elastosil verwendet, das heißt ein dichtes porenfreies Elastomermaterial auf der Basis von Silikonkautschuk, wie zum Beispiel flüssiger Silikonkautschuk LSR (Liquid Silicon Rubber), dessen Federsteifigkeit nach dem Festwerden einen Wert besitzt, der bei den üblichen Massen eines Sensormoduls eines mikromechanisch gefertigten Drehratensensors eine weit unterhalb des kritischen Frequenzbereichs liegende Resonanzfrequenz und damit im kritischen Frequenzbereich eine starke Dämpfung besitzt. Eine weitere vorteilhafte Ausgestaltung der Erfindung sieht vor, dass das Sensormodul eine den Inertialsensor und die Auswerteschaltung tragende Platte umfasst, die in eine etwas größere kongruente Aussparung des Trägers eingesetzt und durch Umspritzen mit dem E-lastomermaterial elastisch im Träger aufgehängt wird. Bei einer Bewegung der Platte senkrecht zu ihren Breitseitenflächen wird das den Spalt zwischen der Platte und dem Träger überbrückende Elastomermaterial auf Scherung beansprucht. Diese Scherbeanspruchung des Elastomermaterials sorgt im kritischen Frequenzbereich für eine ausgezeichnete Dämpfung, was den Einsatz der erfindungsgemäßen Inertialsensoranordnung in schwingungstechnisch stark belasteten Bereichen ermöglicht.

Besonders vorteilhaft ist ein Einbau der erfindungsgemäßen Inertialsensoranordnung direkt in ein Steuergerät eines Systems zur Fahrdynamikregelung, zum Beispiel in ein Anbausteuergerät eines ESP, wodurch eine umfangreiche Verkabelung und ein zusätzliches schwingungsentkoppeltes Gehäuse für die Sensoranordnung entbehrlich wird.

Um die von der Auswerteschaltung in elektrische Signale umgewandelten Messwerte des Inertialsensors zum Steuergerät zu übertragen, ohne die schwingungstechnische Entkopplung des Sensormoduls von dem starr in das Steuergerät eingebauten Träger zu stören, erfolgt die Übertragung der Signale bevorzugt durch Bonddrähte, die von der Auswerteschaltung des Sensormoduls zu einer mit dem Steuergerät verbundenen Schaltung auf dem Träger führen.

### Zeichnung

Die Erfindung wird nachfolgend in einem Ausführungsbeispiel anhand der zugehörigen Zeichnung näher erläutert. Es zeigen:
- Figur 1: eine auseinandergezogene perspektivische Ansicht einer erfindungsgemäßen Inertialsensoranordnung;
- Figur 2: eine perspektivische Ansicht von Teilen der Inertialsensoranordnung aus Figur 1;
- Figur 3: eine perspektivische Ansicht eines Steuergeräts eines Fahrdynamik-Regel-Systems eines Kraftfahrzeugs mit der eingebauten Inertialsensoranordnung aus Figur 1;
- Figur 4: eine teilweise geschnittene vergrößerte perspektivische Ansicht eines Teils des Steuergeräts und der Inertialsensoranordnung;
- Figur 5: eine schematische Darstellung eines Feder-Masse-Systems;
- Figur 6: ein Schaubild der Amplituden-Übertragungsfiunktion des Feder-Masse-Systems.

### Beschreibung des Ausführungsbeispiels

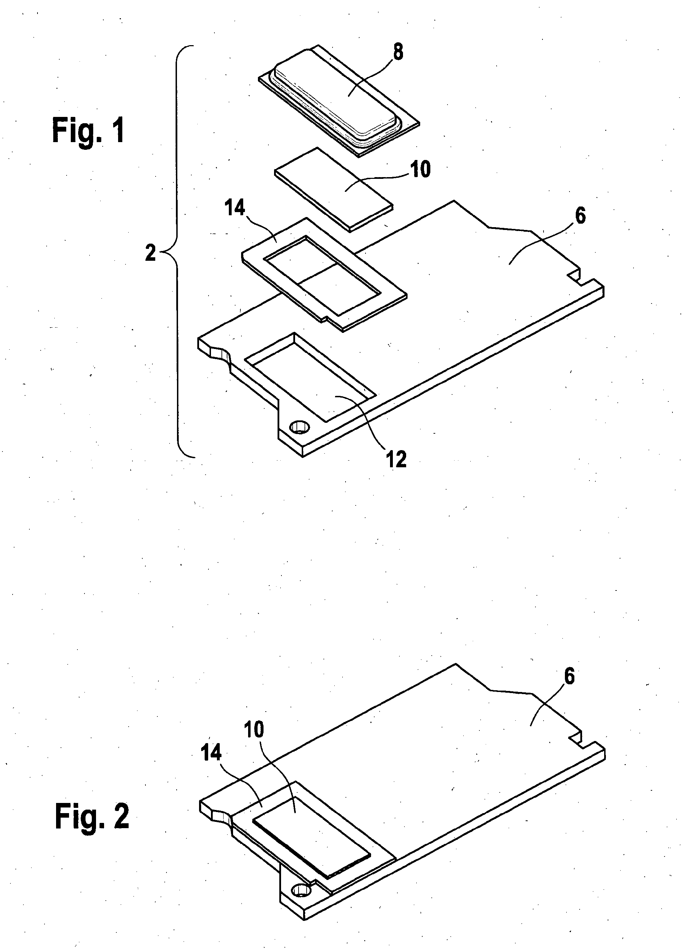

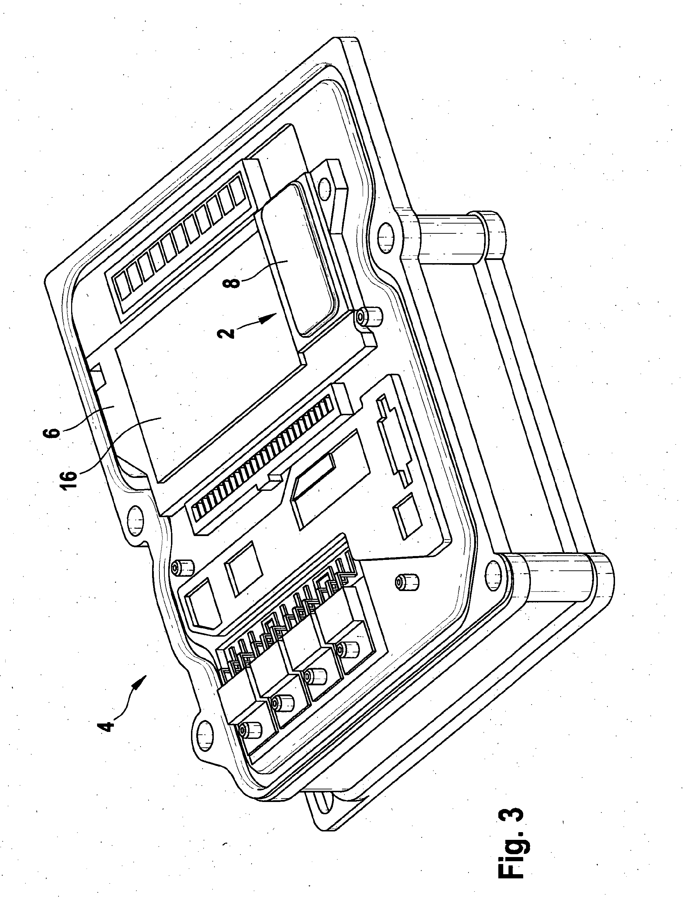

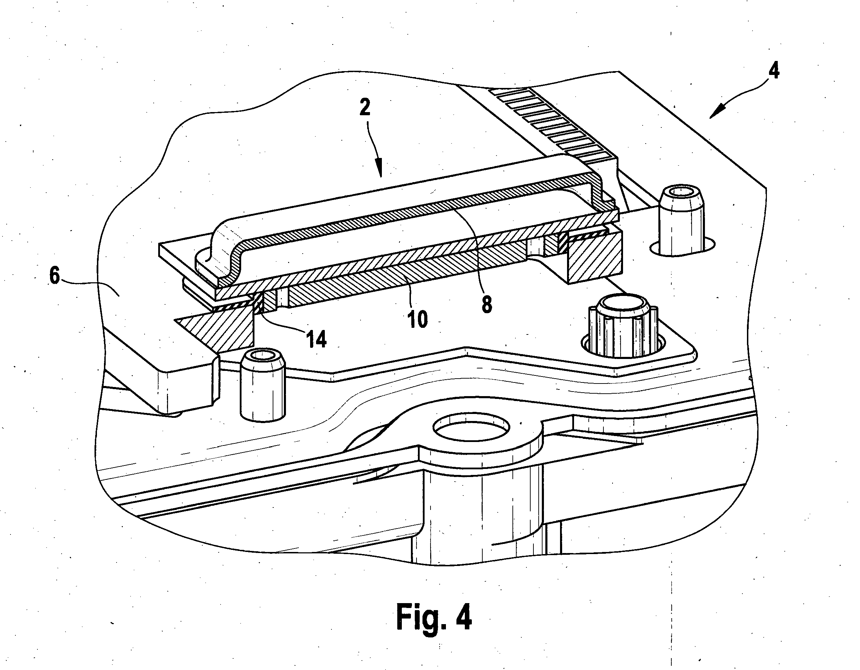

Die in den Figuren 1 bis 4 dargestellte Inertialsensoranordnung 2 bildet einen Teil eines Anbausteuergeräts 4 eines Systems zur Regelung der Fahrdynamik eines Kraftfahrzeugs, wie am besten in Figur 3 dargestellt, und besteht im Wesentlichen aus einer Trägerplatte 6 zur starren Befestigung auf dem Anbausteuergerät 4, sowie einem auf der Trägerplatte 6 angebrachten Sensormodul 8, das einen mikromechanisch hergestellten Drehratensensor (nicht dargestellt) und eine Auswerteschaltung in Form eines auf dem Sensor montierten ASIC (nicht dargestellt) umfasst.

Der Drehratensensor dient zur Erfassung einer fahrdynamischen Gier- bzw. Drehrate und weist im Inneren ein Messelement auf, das in an sich bekannter Weise angeregt wird, um es in eine oszillierende Bewegung mit einer Schwingungsfrequenz zwischen 1 und 30 kHz zu versetzen. Wenn die vom Messelement gebildete Masse mit der Geschwindigkeit v einer überlagerten Drehbewegung mit einer Drehrate ω ausgesetzt ist, wird das Messelement mit der Coriolis-Beschleunigung *a_{c}* beschleunigt. Da für die Größe der Coriolis-Beschleunigung *a̅_{c}* die Bedingung *a̅_{c}* = 2(ω̅ ×*̅v̅*̅) gilt, kann von einem Demodulator der Auswerteschaltung des Sensors aus der gemessenen Coriolis-Beschleunigung *a_{c}* ein zur Drehrate proportionaler Signalanteil und damit die Drehrate selbst ermittelt werden.

Die Frequenz der auftretenden Coriolis-Beschleunigung *a̅_{c}* entspricht der Anregungs- oder Schwingungsfrequenz der oszillierenden Masse bzw. Schwingung des Messelements, wodurch der Sensor sehr anfällig für Störbeschleunigungen oder Störschwingungen mit einer Frequenz im Bereich dieser Anregungs- oder Schwingungsfrequenz ist, da der Demodulator nicht mehr zwischen Störbeschleunigung und Coriolis-Beschleunigung unterscheiden kann. Wenn daher an der Einbaustelle des Steuergeräts 4 derartige Störbeschleunigungen auftreten, kann dies dazu führen, dass das Ausgangssignal des Sensors stark gestört und für das System zur Regelung der Fahrdynamik, wie ein ESP-System, nicht mehr akzeptabel ist, was Systemabschaltungen oder andere unerwünschte Störungen zur Folge hat.

Um zu verhindern, dass der Drehratensensor derartigen Störbeschleunigungen ausgesetzt ist, wird das Sensormodul 8 auf einer Montageplatte 10 montiert, die zuvor in einem Formwerkzeug eine etwas größere kongruente Aussparung 12 der Trägerplatte 6 eingesetzt und dann mit einem Elastomermaterial 14 umspritzt wird, wie am besten in Figur 2 dargestellt. Das aus flüssigem Silikonkautschuk (LSR) bestehende Elastomermaterial 14 haftet nach dem Festwerden an den gegenüberliegenden Rändern der Montageplatte 10 und der Aussparung 12 der Trägerplatte 6, wobei es einen umlaufenden Spalt zwischen der Montageplatte 10 und der Trägerplatte 6 entlang seiner gesamten Länge überbrückt und die Oberseite des Randes der Aussparung 12 überlappt. Die aus Aluminium hergestellte Trägerplatte 6 trägt außer dem Sensormodul 8 noch eine Hybridschaltung 16 (Figur 3), die jedoch nicht im Einzelnen dargestellt ist.

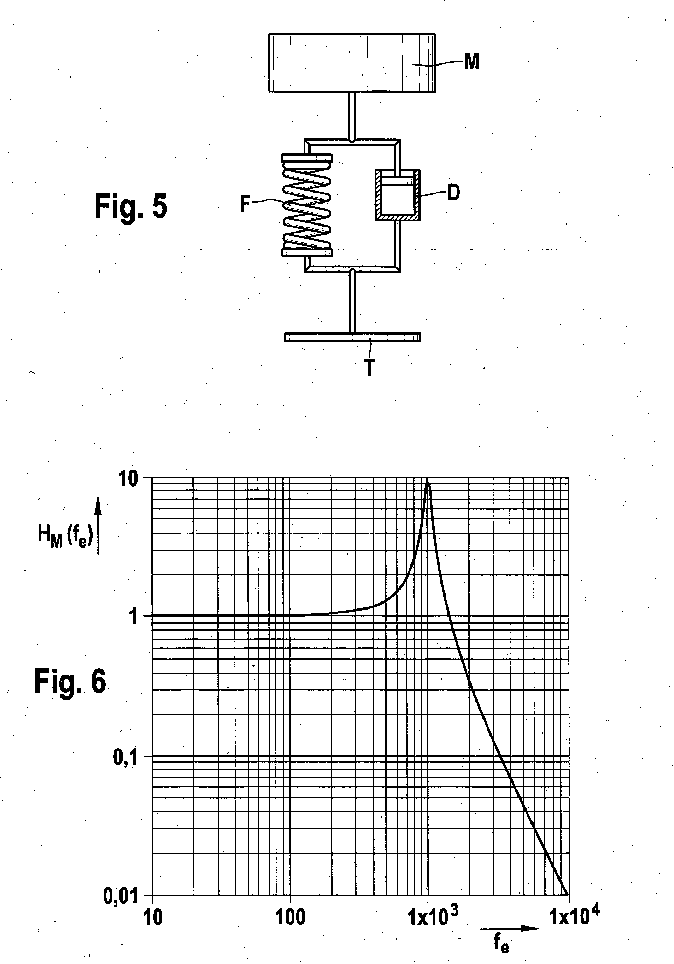

Durch diese Anordnung wird nach der Anbringung des Sensormoduls 8 auf der Montageplatte 10 ein Feder-Masse-System mit Dämpfung gebildet, wie in Figur 5 schematisch dargestellt, bei dem das Sensormodul 8 und die Montageplatte 10 gemeinsam eine seismische Masse M, die Trägerplatte 6 einen Träger T und das Elastomermaterial 14 die Feder F bildet, und durch seine innere Reibung zugleich für die Dämpfung D sorgt.

Bei einer Relativbewegung von Trägerplatte 6 und Montageplatte 10 in einer zu den Breitseitenflächen der Montageplatte 10 senkrechten Richtung wird das Elastomermaterial 14 auf Scherung beansprucht und sorgt infolge dieser Beanspruchung durch seine innere Reibung bzw. durch Aufnahme von Verformungsenergie für eine Dämpfung der Bewegung und damit für eine schwingungstechnische Entkopplung der Montageplatte 10 und damit des Sensormoduls 8 von der Trägerplatte 6 in der für den Sensor entscheidenden Richtung.

Durch eine geeignete Wahl der Summe der Massen des Sensormoduls 8 und der Montageplatte 10 sowie der Materialeigenschaften, der Spaltbreite des umlaufenden Spaltes zwischen der Montageplatte 10 und der Trägerplatte 6 sowie der Querschnittsabmessungen des Elastomermaterials 14 im Spalt und damit auch von dessen Federsteifigkeit lässt sich die Resonanzfrequenz des von diesen Komponenten gebildeten Feder-Masse-Systems so steuern, dass sie weit unterhalb der kritischen Schwingungsfrequenzen liegt.

Figur 6 zeigt ein Beispiel eines Feder-Masse-Systems, das zur Entkopplung eines Drehratensensors geeignet ist, der eine Schwingungsfrequenz von 10 kHz besitzt und daher besonders empfindlich für Störbeschleunigungen mit derartigen Frequenzen ist. Das in Figur 6 dargestellte Feder-Masse-System besitzt eine Resonanzfrequenz von 1 kHz und weist jenseits der Resonanzfrequenz eine steil abfallende Amplitudenübertragungsfunktion auf, bei der die Übertragungsamplitude beim Zehnfachen der Resonanzfrequenz nur noch etwa 1 % der Anregungsamplitude beträgt.

Bei der erfindungsgemäßen Inertialsensoranordnung 2 werden daher die Massen des Sensormoduls 8 und der Montageplatte 10 so auf die Federsteifigkeit des Elastomermaterials 14 abgestimmt, dass die Resonanzfrequenz des Feder-Masse-Systems deutlich unterhalb des kritischen Frequenzbereichs liegt, bei dem der Drehratensensor von der Trägerplatte 2 entkoppelt oder abgekoppelt werden soll, das heißt im vorliegenden Fall 10 kHz. Die Resonanzfrequenz des Feder-Masse-Systems wird daher sinnvollerweise in einen Bereich von etwa 1 kHz verlegt, so dass Störbeschleunigungen im Bereich von 10 kHz nur noch mit etwa 1 % ihrer Amplitude den Sensor erreichen.

Nach dem Einbau der Trägerplatte 6 in das Steuergerät 4, wie in Figur 3 dargestellt, wird die Auswerteschaltung mit zugehörigen Anschlüssen des Steuergeräts 4 mit der Hybridschaltung 16 durch Bonddrähte (nicht dargestellt) verbunden, um die Signale der Auswerteschaltung des Sensormoduls 8 in die Schaltung 16 und von dieser in das Steuergerät 4 zu übermitteln. Anschließend kann das Steuergerät 4 an einem Karosserieteil des Kraftfahrzeugs angebaut werden, wobei infolge der Dämpfung durch das Elastomermaterial 14 im Bereich oberhalb von 10 kHz selbst starke Schwingungen nicht in das Sensormodul 8 übertragen werden.

## Patentansprüche

1. Inertialsensoranordnung, insbesondere zur Montage in einem Kraftfahrzeug, mit einem auf einem Träger (6) angebrachten Sensormodul (8), das einen mikromechanisch hergestellten Inertialsensor und eine Auswerteschaltung umfasst, wobei das Sensormodul (8) auf einer Montageplatte (10) angeordnet und durch ein aus einem Elastomermaterial (14) bestehendes elastisches Koppelelement (14) mit dem Träger (6) verbunden ist und wobei der Inertialsensor ein Drehratensensor ist, der die Coriolis-Beschleunigung eines oszillierenden Sensorelements erfasst, **dadurch gekennzeichnet, dass** der Träger (6) eine Aussparung (12) aufweist, dass die Montageplatte (10) in der Aussparung (12) angeordnet ist, und dass der Träger (6) und die Montageplatte (10) entlang von mindestens einem Teil ihrer gegenüberliegenden Ränder durch das Elastomermaterial (14) verbunden sind, und dass das Koppelelement (14) bei einer Relativbewegung des Trägers (6) und der Montageplatte (10) in einer zu den Breitseitenflächen der Montageplatte (10) senkrechten Richtung entsprechend der Richtung des Vektors der Coriolis-Beschleunigung des Sensorelements auf Scherung beansprucht wird.

2. Inertialsensoranordnung nach Anspruch 1, **dadurch gekennzeichnet, dass** das Sensormodul (8) mit dem Träger (6) und dem Koppelelement (14) ein Feder-Masse-System mit Dämpfung bildet.

3. Inertialsensoranordnung nach Anspruch 1 oder 2, **dadurch gekennzeichnet, dass** das Elastomermaterial (14) ein Elastosil ist.

4. Inertialsensoranordnung nach einem der vorangehenden Ansprüche, **dadurch gekennzeichnet, dass** das Elastomermaterial (14) zwischen den Träger (6) und die Montageplatte (10) für das Sensormodul (8) eingespritzt ist.

5. Inertialsensoranordnung nach einem vorangehenden Ansprüche, **dadurch gekennzeichnet, dass** das Sensormodul (8) durch Bonddrähte mit einer auf dem Träger (6) angeordneten Schaltung (16) verbunden ist.

6. Anbausteuergerät für ein System zur Regelung der Fahrdynamik eines Kraftfahrzeugs, **gekennzeichnet durch** eine eingebaute Inertialsensoranordnung nach einem der vorangehenden Ansprüche.

7. Kraftfahrzeug, **gekennzeichnet durch** ein Anbausteuergerät nach Anspruch 6.

## Claims

1. Inertial sensor arrangement, in particular for mounting in a motor vehicle, having a sensor module (8) fitted to a carrier (6), which sensor module comprises a micro-mechanically produced inertial sensor and an evaluation circuit, the sensor module (8) being arranged on a mounting plate (10) and being connected to the carrier (6) by an elastic coupling element (14) consisting of an elastomer material (14), and the inertial sensor being a yaw rate sensor, which measures the Coriolis acceleration of an oscillating sensor element, **characterized in that** the carrier (6) has a cut-out (12), **in that** the mounting plate (10) is arranged in the cut-out (12), and **in that** the carrier (6) and the mounting plate (10) are connected by the elastomer material (14) along at least part of their opposite edges, and **in that**, in the event of a relative movement of the carrier (6) and the mounting plate (10), the coupling element (14) is loaded in shear in a direction perpendicular to the broad side surfaces of the mounting plate (10), corresponding to the direction of the vector of the Coriolis acceleration of the sensor element.

2. Inertial sensor arrangement according to Claim 1, **characterized in that** the sensor module (8), together with the carrier (6) and the coupling element (14), forms a spring-mass system with damping.

3. Inertial sensor arrangement according to Claim 1 or 2, **characterized in that** the elastomer material (14) is an elastosil.

4. Inertial sensor arrangement according to one of the preceding claims, **characterized in that** the elastomer material (14) is injected in between the carrier (6) and the mounting plate (10) for the sensor module (8).

5. Inertial sensor arrangement according to one of the preceding claims, **characterized in that** the sensor module (8) is connected by bonding wires to a circuit (16) arranged on the carrier (6).

6. Add-on control device for a system for controlling the vehicle dynamics of a motor vehicle, **characterized by** an incorporated inertial sensor arrangement according to one of the preceding claims.

7. Motor vehicle, **characterized by** an add-on control device according to Claim 6.

## Revendications

1. Ensemble de capteurs inertiels, en particulier destinés à être montés dans un véhicule automobile et présentant un module de capteur (8) qui est placé sur un support (6) et qui comprend un capteur inertiel réalisé par voie micromécanique et un circuit d'évaluation,
le module de capteur (8) étant disposé sur une plaque de montage (10) et étant relié au support (6) par un élément élastique d'accouplement (14) constitué d'un matériau élastomère (14),
le capteur inertiel étant un capteur de vitesse de rotation qui saisit l'accélération de Coriolis d'un élément de capteur oscillant,
**caractérisé en ce que**
le support (6) présente une découpe (12),
**en ce que** la plaque de montage (10) est disposée dans la découpe (12) et
**en ce que** le support (6) et la plage de montage (10) sont reliés par le matériau élastomère (14) sur au moins une partie de leurs bords opposés et
**en ce que** l'élément d'accouplement (14) est sollicité en cisaillement en cas de déplacement relatif entre le support (6) et la plaque de montage (10) dans une direction perpendiculaire à la large surface latérale de la plaque de montage (10) qui correspond à la direction du vecteur de l'accélération de Coriolis de l'élément de capteur.

2. Ensemble de capteurs inertiels selon la revendication 1, **caractérisé en ce que** le module de capteur (8) forme avec le support (6) et l'élément d'accouplement (14) un système à masse élastique amorti.

3. Ensemble de capteurs inertiels selon les revendications 1 ou 2, **caractérisé en ce que** le matériau élastomère (14) est un élastosil.

4. Ensemble de capteurs inertiels selon l'une des revendications précédentes, **caractérisé en ce que** le matériau élastomère (14) est injecté entre le support (6) et la plaque (10) prévue pour le montage du module de capteur (8).

5. Ensemble de capteurs inertiels **caractérisé en ce que** le module de capteur (8) est relié par des fils de liaison à un circuit (16) disposé sur le support (6).

6. Appareil de commande intégré dans un système de régulation de la dynamique de roulage d'un véhicule automobile, **caractérisé en ce qu'**un ensemble de capteurs inertiels selon l'une des revendications précédentes y est incorporé.

7. Véhicule automobile **caractérisé par** un appareil de commande intégré selon la revendication 6.
